# DEMANDE DE BREVET EUROPEEN

(11) **EP 0 570 297 A1**
(43) Date de publication de la demande: **18.11.1993**
(21) Numéro de dépôt: 93401243.6
(22) Date de dépôt: 14.05.1993
(51) Int. Cl.: F16D 65/04

(54) **Dispositif de fixation d'un frein à bande de transmission automatique**

(30) Priorité: 15.05.1992 FR 9205917
(71) Demandeur: REGIE NATIONALE DES USINES RENAULT S.A., F-92109 Boulogne Billancourt (FR)
(72) Inventeur: Buannec, Michel, F-92000 Nanterre (FR)

(57) **Abrégé**

Dispositif de fixation d'un frein à bande sur le carter (3) d'une transmission automatique, comportant d'une part un premier axe (4) ou axe d'action, en appui contre une première extrémité (6) de la bande de freinage (1) et pouvant être déplacé longitudinalement en direction de celle-ci pour la serrer autour d'un élément rotatif (2) de la transmission, et d'autre part un second axe (5) ou axe de réaction aligné avec le premier axe (4), en appui contre la seconde extrémité (7) de la bande (1) et introduit dans un orifice cylindrique (21) du carter (3), caractérisé en ce que l'axe de réaction (5) est constitué d'un corps cylindrique surmonté d'une tête (18) engagée dans un alésage cylindrique orienté transversalement à l'orifice cylindrique (21).

## Description

La présente invention se rapporte à un frein à bande, utilisable notamment dans une boîte de vitesses automatique de véhicule automobile.

La fonction d'un frein à bande dans une transmission automatique est de bloquer un élément de réaction appartenant au train épicycloïdal, en le rendant, de façon temporaire, solidaire du carter. Les freins à bande utilisés le plus fréquemment en automobile se composent pour l'essentiel d'une bande formant un ou deux enroulements autour d'un élément rotatif de la transmission. Lorsque le frein est actionné, la bande est serrée par traction sur une première extrémité, autour de l'élément rotatif, de façon à immobiliser celui-ci. La seconde extrémité de la bande, fixée sur le carter, transmet à ce dernier une force de réaction, toujours plus importante que la force de traction exercée sur sa première extrémité.

Dans la pratique, la réaction exercée par la bande de frein sur le carter lors de l'activation du frein est suffisamment violente pour que la fixation de ces deux éléments nécessite de mettre en oeuvre des moyens particulièrement résistants.

La publication DE 3 132 639 illustre un mode de fixation de bande de freinage, appliqué aujourd'hui sur de nombreuses boîtes de vitesses automatiques. Selon le dispositif décrit dans ce document, la bande forme une boucle ouverte autour de l'élément rotatif de la transmission. Chacune de ses deux extrémités est recourbée vers l'extérieur, et est en appui contre un axe. Les deux axes sont alignés, le premier, sollicité par une pression de commande lors du freinage, permet à la bande de serrer l'élément rotatif, tandis que le second, solidaire du carter assure la transmission sur celui-ci de l'effort de réaction engendré par le freinage.

Ce type de fixation de la bande de freinage, pose inévitablement des problèmes de montage et d'immobilisation du second axe, ou axe de réaction vis-à-vis du carter. Pour renforcer cette liaison, certains constructeurs ont cherché à adapter des éléments et des structures plus résistantes. L'efficacité d'un tel dispositif de fixation est toutefois limitée. En effet le contact ponctuel entre l'axe et la pastille est le lieu de forces de percussion très violentes sur cette dernière, pouvant entraîner des déformations locales. Par ailleurs, l'expérience montre qu'un tel dispositif pose des problèmes délicats de maintien de l'axe de réaction dans son logement au cours du montage, notamment dans le cas où les axes sont disposés verticalement.

Pour palier à l'ensemble des inconvénients propres aux dispositifs de fixation de frein à bande connus, l'invention propose de maintenir l'axe de réaction d'un frein à bande selon une disposition particulièrement adaptée à la transmission d'efforts importants, et simple à mettre en oeuvre lors de l'assemblage de la transmission.

Cette invention concerne un dispositif de fixation d'un frein à bande sur le carter d'une transmission automatique, comportant d'une part un premier axe ou axe d'action, en appui contre une première extrémité de la bande de freinage et pouvant être déplacé longitudinalement en direction de celle-ci pour la serrer autour d'un élément rotatif de la transmission, et d'autre part un second axe ou axe de réaction aligné avec le premier axe, en appui contre la seconde extrémité de la bande et introduit dans un orifice cylindrique du carter. Ce dispositif est caractérisé en ce que l'axe de réaction est constitué d'un corps cylindrique surmonté d'une tête engagée dans un alésage cylindrique orienté transversalement à l'orifice.

Selon un mode de réalisation de l'invention, la tête de l'axe de réaction peut être maintenu à l'intérieur de l'alésage par un élément de retenue.

Selon un mode de réalisation de l'invention, le corps cylindrique et la tête de l'axe de réaction sont raccordés par une gorge.

Selon un mode de réalisation de l'invention, l'élément de retenue est une douille cylindrique en acier traité, fendue longitudinalement, qui est dimensionnée de façon à être appliquée contre l'alésage et à retenir par sa gorge la tête de l'axe de réaction à l'intérieur de celui-ci.

Selon un mode de réalisation de l'invention, la partie supérieure de la tête est arrondie conformément à l'intérieur de la douille de façon à être entièrement en appui contre celle-ci.

Selon un mode de réalisation de l'invention, l'alésage est ménagé dans un bossage du carter.

L'invention sera mieux comprise à la lecture de la description suivante d'un mode de réalisation particulier de celle-ci, en liaison avec les dessins annexés, sur lesquels :
- la figure 1 illustre un premier mode de fixation conforme à l'art antérieur,
- les figure 2 et 3 illustrent un second mode de fixation conforme à l'art antérieur,,
- la figure 4 représente le dispositif de fixation faisant l'objet de l'invention,
- la figure 5 est une vue partielle du même dispositif avant l'assemblage de ses différents éléments sur le carter.

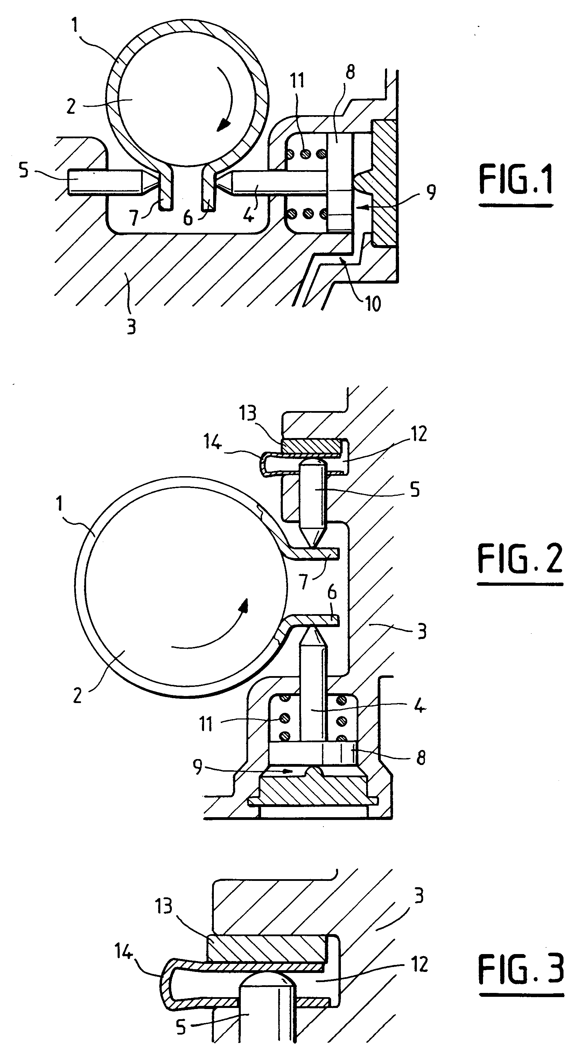

Le frein à bande représenté sur la figure 1, illustrant un premier dispositif de fixation connu, comporte de façon classique une bande 1, formant une boucle ouverte, autour d'un élément rotatif 2 d'une transmission automatique. Le carter 3 de la transmission supporte deux axes 4, 5 en appui sur les deux extrémités 6, 7 de la bande 1, recourbées vers l'extérieur. Le premier axe 4, ou "axe d'action" du frein, est monté sur un piston 8 de commande de freinage. Le piston 8 peut se déplacer à l'intérieur de la chambre de commande 9 intégrée dans le carter 3, et alimentée en fluide hydraulique par un conduit 10 : le piston 8 et l'axe 7 sont repoussés en permanence sous l'action d'un ressort de rappel 11 tendant à desserrer la bande 1 de l'élément rotatif 2. Lorsque la pression régnant dans la chambre 9 devient suffisante, l'axe 4 est déplacé de façon à serrer la bande de freinage 1. La réaction de l'élément rotatif 2 est transmise au carter 3 par un second axe 5, ou axe de réaction. Ce dispositif ne présente pas d'adaptation particulière, propre à renforcer la fixation de l'axe de réaction 5 sur le carter 3.

Sur le dispositif de la figure 2 illustrant un autre dispositif de fixation connu, le carter 3 présente un renfoncement 12. Ainsi que le met en évidence l'agrandissement de la figure 3, ce renfoncement 12, permet de disposer à l'extrémité supérieure de l'axe de réaction 5, une pastille 13 et un ressort 14, en appui contre cette extrémité. La pastille 13 a pour fonction de favoriser la reprise d'effort entre l'axe de réaction 5 et le carter 3 grâce à sa grande surface de contact avec celui-ci, tandis que la plaque de ressort 14 facilite le maintien de la pastille 13 vis-à-vis de l'extrémité arrondie de l'axe 5 et du carter 3. Comme indiqué plus haut, lorsque la structure générale de la transmission est telle que les axes 4 et 5 sont disposés verticalement, ce dispositif de fixation est difficile à monter. En effet, avant le montage de la bande 1, il est nécessaire de retenir momentanément l'axe de réaction dans son logement par un système approprié.

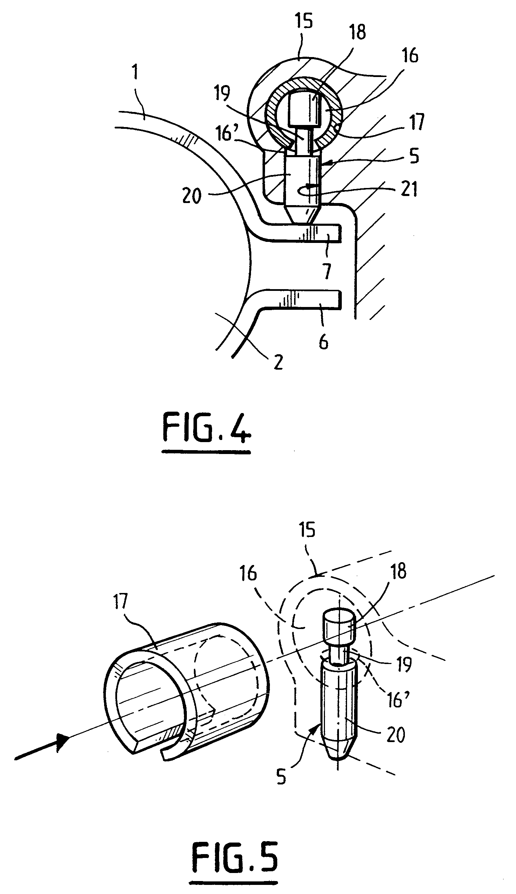

La présente invention propose de former dans la masse du carter 3 un bossage 15. Ce bossage 15 apparaissant sur les figures 4 et 5 présente un alésage cylindrique 16 à l'intérieur duquel est engagée une douille 17, fendue vers le bas, en acier traité. Par ailleurs, l'axe de réaction 5 présente, sur ces figures, une structure particulière. Il comporte une tête 18, dont l'extrémité supérieure est sphérique. La tête 18 de l'axe 5, surmonte une gorge 9 prolongée vers le bas par un corps cylindrique 20, constituant la partie la plus importante de l'axe 5.

Lors du montage, on positionne dans un premier temps l'axe 5 dans le carter 3, de manière à ce que la gorge 19 se trouve au niveau du fond 16' de l'alésage 16. Il est alors possible d'insérer la douille fendue 17 en position ouverte vers le bas, de façon à emprisonner la tête 18 de l'axe 5, et à empêcher que ce dernier ne s'échappe vers le bas hors de l'alésage 16. Le carter 3 peut donc être déplacé ou retourné sur la chaîne de montage sans risquer de perdre l'axe de réaction 5, qui est retenu par la douille 17.

En conclusion, que la solution proposée par l'invention au problème de fixation de l'axe de réaction d'un frein à bande permet de renoncer à la pastille de reprise d'effort à la plaque ressort utilisés sur certains dispositifs connus. Par ailleurs, il n'est pas nécessaire de prévoir d'organes particuliers pour retenir l'axe de réaction 5 en cours de montage de transmission. Enfin, la douille fendue 17 étant de forme et de dimensions correspondant à celles de l'alésage 16, elle est appliquée sur toute sa longueur contre celui-ci, tandis que la partie supérieure de la tête 18 est arrondie conformément à l'intérieur de la douille 17 de façon à être entièrement en appui contre celle-ci. Il en résulte que la transmission de l'effort de réaction dans la masse du carter 3 par l'intermédiaire de la tête 18 de l'axe 5 et de la douille 17 s'effectue sur des surfaces de contact étendues. Cette disposition permet de réduire les risques de déformation locale du carter 3, renforcé grâce au bossage 15.

## Revendications

**[1]** Dispositif de fixation d'un frein à bande sur le carter (3) d'une transmission automatique, comportant d'une part un premier axe (4) ou axe d'action, en appui contre une première extrémité (6) de la bande de freinage (1) et pouvant être déplacé longitudinalement en direction de celle-ci pour la serrer autour d'un élément rotatif (2) de la transmission, et d'autre part un second axe (5) ou axe de réaction aligné avec le premier axe (4), en appui contre la seconde extrémité (7) de la bande (1) et introduit dans un orifice cylindrique (21) du carter (3), caractérisé en ce que l'axe de réaction (5) est constitué d'un corps cylindrique surmonté d'une tête (18) engagée dans un alésage cylindrique orienté transversalement à l'orifice cylindrique (21).

**[2]** Dispositif de fixation selon la revendication 1, caractérisé en ce que la tête (18) de l'axe de réaction (5) peut être maintenue à l'intérieur de l'alésage par un élément de retenue (17).

**[3]** Dispositif de fixation selon les revendications 1 ou 2, caractérisé en ce que le corps cylindrique (20) et la tête (18) de l'axe de réaction (5) sont raccordés par une gorge (19).

**[4]** Dispositif de fixation selon la revendication 3, caractérisé en ce que l'élément de retenue (17) est une douille cylindrique en acier traité, fendue longitudinalement, qui est dimensionnée de façon à être appliquée contre l'alésage (16) et à retenir par sa gorge (19) la tête (18) de l'axe de réaction (5) à l'intérieur de celui-ci.

**[5]** Dispositif de fixation selon la revendication (4), caractérisé en ce que la partie supérieure de la tête (18) est arrondie conformément à l'intérieur de la douille (17) de façon à être entièrement en appui contre celle-ci.

**[6]** Dispositif de fixation selon l'une quelconque des revendications précédentes, caractérisé en ce que l'alésage (16) est ménagé dans un bossage (15) du carter. (3).
